# EUROPEAN PATENT SPECIFICATION

(11) **EP 4 420 804 B1**
(45) Date of publication and mention of the grant of the patent: **06.05.2026**
(21) Application number: 22903944.1
(22) Date of filing: 08.11.2022
(51) Int. Cl.: G06F 30/15, G06F 30/23, B21D 22/20, B21D 22/26, G06F 113/24, B21D 22/00

(54) **PRESS-FORMING ANALYSIS METHOD, PRESS-FORMING ANALYSIS APPARATUS, AND PRESS-FORMING ANALYSIS PROGRAM**
PRESSFORMUNGSANALYSEVERFAHREN, PRESSFORMUNGSANALYSEVORRICHTUNG UND PRESSFORMUNGSANALYSEPROGRAMM
PROCÉDÉ D'ANALYSE DU FORMAGE À LA PRESSE, DISPOSITIF D'ANALYSE DU FORMAGE À LA PRESSE ET PROGRAMME D'ANALYSE DU FORMAGE À LA PRESSE

(30) Priority: 07.12.2021 JP 2021198176; 16.02.2022 JP 2022021752
(43) Date of publication of application: 28.08.2024
(73) Proprietor: JFE Steel Corporation, Tokyo 100-0011 (JP)
(72) Inventor: OGAWA, Takeshi, Tokyo 100-0011 (JP); SUMIKAWA, Satoshi, Tokyo 100-0011 (JP); YAMASAKI, Yuji, Tokyo 100-0011 (JP); SHINMIYA, Toyohisa, Tokyo 100-0011 (JP)
(74) Representative: Hoffmann Eitle
(86) International application number: PCT/JP2022/041540
(87) International publication number: WO 2023/106013

(56) References cited:
- JP-A- 2005 081 417
- JP-A- 2019 002 834
- JP-A- S6 247 504
- JP-B1- 6 683 269
- US-A1- 2013 041 634
- vol. 18, 1 March 2013, article AKINOBU ISHIWATARI ET AL: "Press Forming Analysis Contributing to the Expansion of High Strength Steel Sheet Applications", pages: 96 - 102, XP055235424
- YOSHIDA TOHRU ET AL: "Shape Control Techniques for High Strength Steel in Sheet Metal Forming", 1 July 2003 (2003-07-01), pages 1 - 6, XP093235257, Retrieved from the Internet <URL:https://www.nipponsteel.com/en/tech/report/nsc/pdf/n8807.pdf> [retrieved on 20250206]

## Description

### Field

The present invention relates to a press forming analysis method, a press forming analysis apparatus, and a press forming analysis program for predicting an influence of a shape variation of a blank taken from a metal sheet having the shape variation in a case where press forming is performed by using the blank.

### Background

In the progress of improvement of collision safety of an automotive body due to tightening of an automobile collision safety standard, weight reduction of automotive body is also required in order to achieve improvement of fuel efficiency of an automobile in response to recent carbon dioxide emission regulations. In order to achieve both the collision safety performance and the weight reduction of automotive body, a growing number of metal sheets having higher strength than before are adopted in automotive bodies.

An actual metal sheet from which a blank for obtaining a press formed part is taken has not been completely flat, but has a waveform (shape variation). Therefore, an actual blank taken from the metal sheet is not necessarily flat, and may have a shape variation.

When a metal sheet having such a waveform is used as a blank and press-formed into an automotive part, the press formed part obtained after the press forming may deviate from targeted dimensional accuracy due to the shape variation.

For example, Patent Literatures 1 and 2 are disclosed as techniques for selecting a press formed part deviating from the targeted dimensional accuracy from press formed parts after press forming.

### Citation List

### Patent Literature

Patent Literature 1: JP S62-047504 A
Patent Literature 2: JP 2019-002834 A

In addition, JP 6 683269 B1 discloses a press forming analysis method of a shape variation of a blank taken from a metal sheet. According to this method, a shape variation blank model corresponding to the shape variation is generated and a shape of a press formed part after die release is acquired by performing press forming analysis using the blank model.

### Summary

### Technical Problem

The techniques disclosed in Patent Literature 1 or 2 compares the shapes of the press formed parts after press forming with each other, and cannot predict an influence of the shape variation of a blank before the press forming on the press formed parts after the press forming. The influence of the shape variation of a blank on the shape of a press formed part has not been predicted. Furthermore, a portion of the press formed part susceptible to the influence of the shape variation of the blank has not been identified.

The present invention has been made to solve the above-described problems, and an object thereof is to provide a press forming analysis method, a press forming analysis apparatus, and a press forming analysis program for predicting an influence of a shape variation of a blank taken from a metal sheet having the shape variation in a case where press forming is performed by using the blank. Solution to Problem

A press forming analysis method according to the present invention predicts an influence of a shape variation of a blank taken from a metal sheet having the shape variation in a case where press forming is performed by using the blank, and includes: a first shape acquisition step of acquiring a shape of a press formed part after die release as a first shape by performing press forming analysis in a case where press forming is performed with a predetermined tool-of-press-forming model by using a flat blank model having a flat shape; a generation step of generating a shape variation blank model corresponding to the shape variation; a second shape acquisition step of acquiring a shape of a press formed part after die release as a second shape by performing press forming analysis in a case where press forming is performed with the predetermined tool-of-press-forming model by using the shape variation blank model; and a deviation amount acquisition step of acquiring a portion where both of the first shape and the second shape deviate from each other and a deviation amount by comparing the first shape and the second shape.

The shape variation blank model generated in the generation step may have a cyclic waveform having a predetermined pitch and a predetermined amplitude.

The shape variation blank model generated in the generation step may be generated by measuring a shape of an actual blank taken from a metal sheet having a shape variation and referring to a measurement result.

In the deviation amount acquisition step, a difference between a springback amount of a predetermined portion in the first shape and a springback amount of a same portion as the predetermined portion of the first shape in the second shape may be acquired as the deviation amount.

The press forming analysis method may further include an identification step of identifying a portion where the deviation amount exceeds a preset threshold as a portion requiring a countermeasure.

A press forming analysis apparatus according to the present invention predicts an influence of a shape variation of a blank taken from a metal sheet having the shape variation in a case where press forming is performed by using the blank, and includes: a first shape acquisition unit configured to acquire a shape of a press formed part after die release as a first shape by performing press forming analysis in a case where press forming is performed with a predetermined tool-of-press-forming model by using a flat blank model having a flat shape; a generation unit configured to generate a shape variation blank model corresponding to the shape variation; a second shape acquisition unit configured to acquire a shape of a press formed part after die release as a second shape by performing press forming analysis in a case where press forming is performed with the predetermined tool-of-press-forming model by using the shape variation blank model; and a deviation amount acquisition unit configured to acquire a portion where both of the first shape and the second shape deviate from each other and a deviation amount by comparing the first shape and the second shape .

The shape variation blank model generated by the generation unit may have a cyclic waveform having a predetermined pitch and a predetermined amplitude.

The shape variation blank model generated by the generation unit may be generated based on a measured value of a shape of an actual blank taken from a metal sheet having a shape variation.

The deviation amount acquisition unit may be configured to acquire, as the deviation amount, a difference between a springback amount of a predetermined portion in the first shape and a springback amount of a same portion as the predetermined portion of the first shape in the second shape.

The press forming analysis apparatus may further include an identification unit configured to identify a portion where the deviation amount exceeds a preset threshold as a portion requiring a countermeasure.

A press forming analysis program according to the present invention causes a computer to function as the press forming analysis apparatus according to the present invention.

### Advantageous Effects of Invention

According to the present invention, it is possible to know a portion having a great influence of the shape variation in a blank on the shape of a press formed part after springback and a deviation amount caused by the shape variation of the blank. Furthermore, the quality of a blank can be predicted by determining the quality of a press formed part based on the deviation amount and a predetermined threshold. This enables grasp of a limit of the shape accuracy of the blank which falls within a shape accuracy required for the press formed part. Press forming with a stably good shape can be performed by selecting a blank having an appropriate shape. Furthermore, when a shape variation of a press formed part occurs, a portion causing the shape variation of a blank before press forming can be identified, and countermeasures therefor can be immediately taken, which leads to improvement of productivity.

### Brief Description of Drawings

FIG. 1 is an explanatory diagram of respective steps of a press forming analysis method according to a first embodiment.
FIG. 2 is an external view of a part targeted in the first embodiment.
FIG. 3 is an explanatory diagram of a flat blank model used in the first embodiment.
FIG. 4 is an explanatory diagram of a first shape for which press forming analysis is performed by using the flat blank model.
FIG. 5 is an explanatory diagram of a shape variation blank model having an uneven shape (Part 1).
FIG. 6 is an explanatory diagram of the shape variation blank model having an uneven shape (Part 2).
FIG. 7 is an explanatory diagram of a second shape for which press forming analysis is performed by using the shape variation blank model.
FIG. 8 illustrates the second shape and the shape variation blank model in association with each other.
FIG. 9 is an explanatory diagram of a press forming analysis apparatus according to a second embodiment.
FIG. 10 is an explanatory diagram of a first shape (a) for which press forming analysis is performed by using the flat blank model and a second shape (b) for which press forming analysis is performed by using the shape variation blank model in an example.
FIG. 11 illustrates the second shape and the shape variation blank model in the example in association with each other.

### Description of Embodiments

### [First Embodiment]

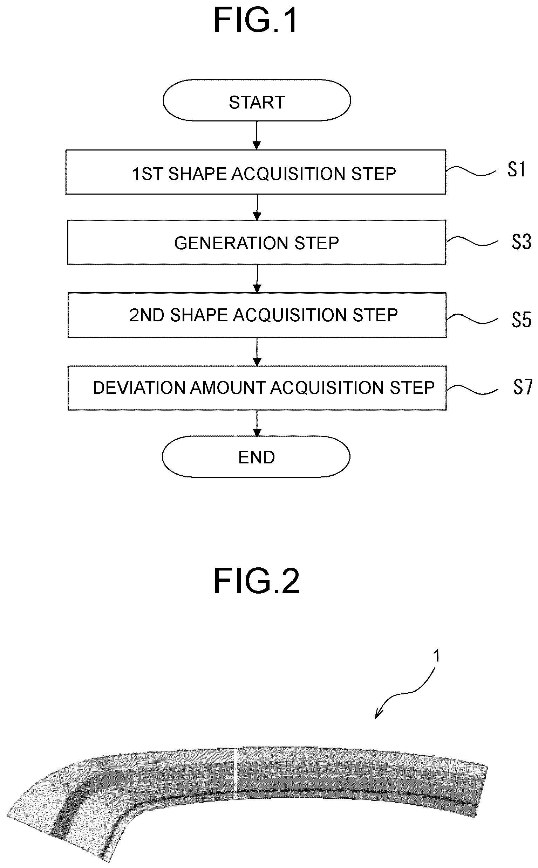

A press forming analysis method according to a present embodiment is used for predicting an influence of a shape variation of a blank in a case where press forming (e.g., crash forming and deep drawing) is performed by using a blank taken from a metal sheet having the shape variation (unevenness). As illustrated in FIG. 1, the press forming analysis method according to the embodiment includes a first shape acquisition step S1, a generation step S3, a second shape acquisition step S5, and a deviation amount acquisition step S7. The first shape acquisition step S1 is a shape acquisition step of standard press-formed part. The generation step S3 is a generation step of shape variation blank model. The second shape acquisition step S5 is a shape acquisition step of press-formed part using shape variation blank. Each configuration will be described in detail below by citing, as an example, a case where press forming is performed with a press formed part 1 in FIG. 2 as a target shape. Although, in the embodiment, a blank model of a 1.5 GPa-class steel sheet having a sheet thickness of 1.2 mm is used, this is not a limitation.

### <first Shape Acquisition Step>

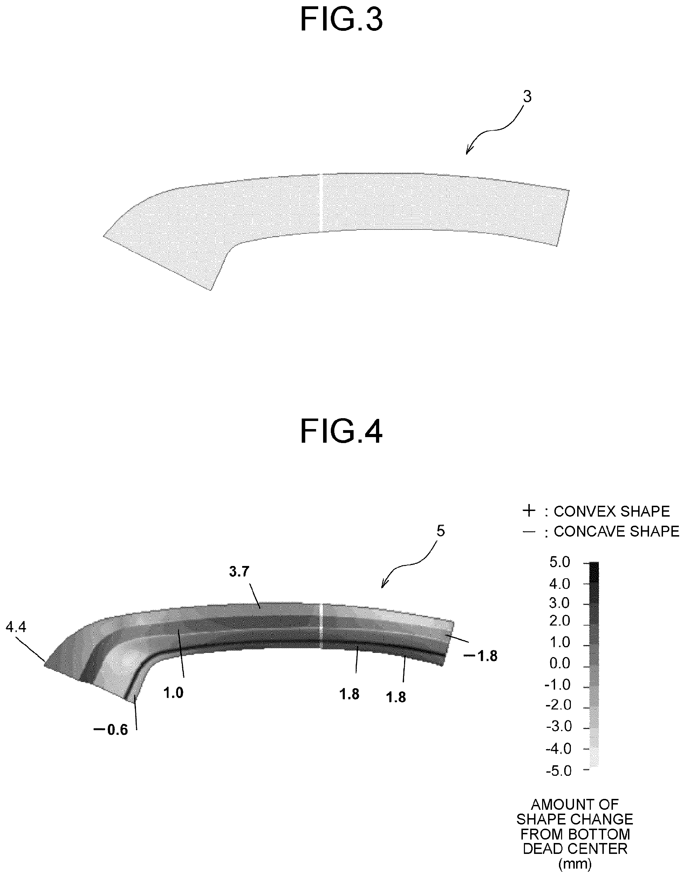

In the first shape acquisition step S1, as illustrated in FIG. 3, press forming analysis in a case where press forming is performed with a predetermined tool-of-press-forming model by using a flat blank model (hereinafter, referred to as "flat blank model 3") is performed, and a shape of a press formed part after die release is acquired as a first shape.

The flat blank model 3 has been commonly used in press forming analysis, and has a flat shape without unevenness.

In the press forming analysis, CAE analysis such as a finite element method (FEM) is usually performed. Both crash forming and deep drawing may be adopted as forming by the CAE analysis. In the embodiment, description will be given by citing the deep drawing as an example. In an example to be described later, description will be given by citing the crash forming as an example.

FIG. 4 illustrates a first shape 5 after die release by press forming analysis. In addition to the shape, FIG. 4 illustrates an amount of shape change from a bottom dead center by shade of color. The amount of shape change is a value obtained by subtracting the height of a corresponding portion of the bottom dead center shape from the height of each portion of the shape of the press formed part after die release and springback after press forming in a press forming direction. That is, when a height difference (amount of shape change) is plus (+), the first shape 5 has a more convex shape than the bottom dead center shape. When the height difference (amount of shape change) is minus (-), the first shape 5 has a more concave shape than the bottom dead center shape. In FIG. 4, color of a portion having a more concave shape than the bottom dead center is lightened, and color of a portion having a convex shape is darkened. Furthermore, numbers with + displayed in the figure denote an amount of shape change in a convex direction, and those with - denote an amount of shape change in a concave direction. Then, mm is used as a unit of the numbers. In the example, as illustrated in FIG. 4, the first shape 5 has an amount of shape change of 4.4 mm at a left end portion, -0.6 mm at a left end of a stretch flange portion, 3.7 mm at a center portion, 1.8 mm at the stretch flange portion on the right side, and -1.8 mm at a right end portion.

### <Generation Step>

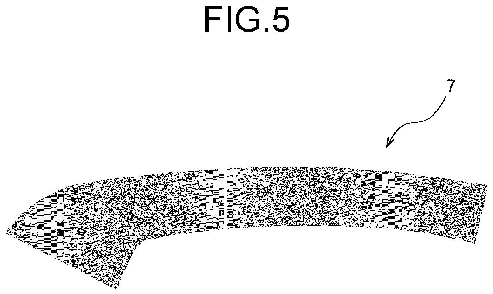

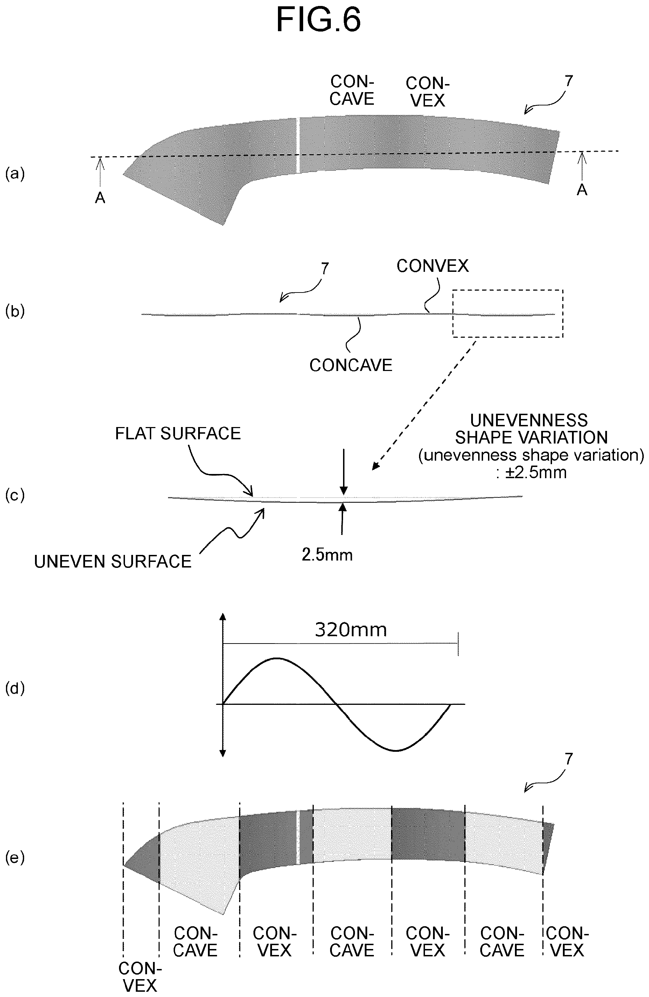

In the generation step S3, a shape variation blank model 7 (see FIG. 5) having a shape corresponding to a shape variation of a blank, for example, a waveform of unevenness is generated. FIG. 5 illustrates an example of a blank model having a cyclic waveform with a predetermined pitch and a predetermined amplitude. Shade of color in FIG. 5 expresses unevenness. A specific shape will be described with reference to FIG. 6.

FIG. 6(b) illustrates a cross section indicated by a broken line in FIG. 6(a) when viewed from an arrow A-A. FIG. 6(c) is an enlarged view of a portion thereof. FIGS. 5 and 6 illustrate, in an example, a shape of a sheet thickness of 1.2 mm, an amplitude of unevenness of ±2.5 mm, and a pitch (see FIG. 6(d)) of unevenness of 320 mm. Furthermore, a start position and an end position of unevenness to be set in the blank are not required to be set at blank edges. FIG. 6(e) highlights an uneven portion having the shape in FIG. 6(a).

The shape variation blank model 7 generated in the generation step S3 may be generated by measuring the shape of an actual blank with, for example, a 3D shape measuring instrument including a laser rangefinder and referring to the measurement result. The actual blank has been taken from a metal sheet having a shape variation at a predetermined position.

### <second Shape Acquisition Step>

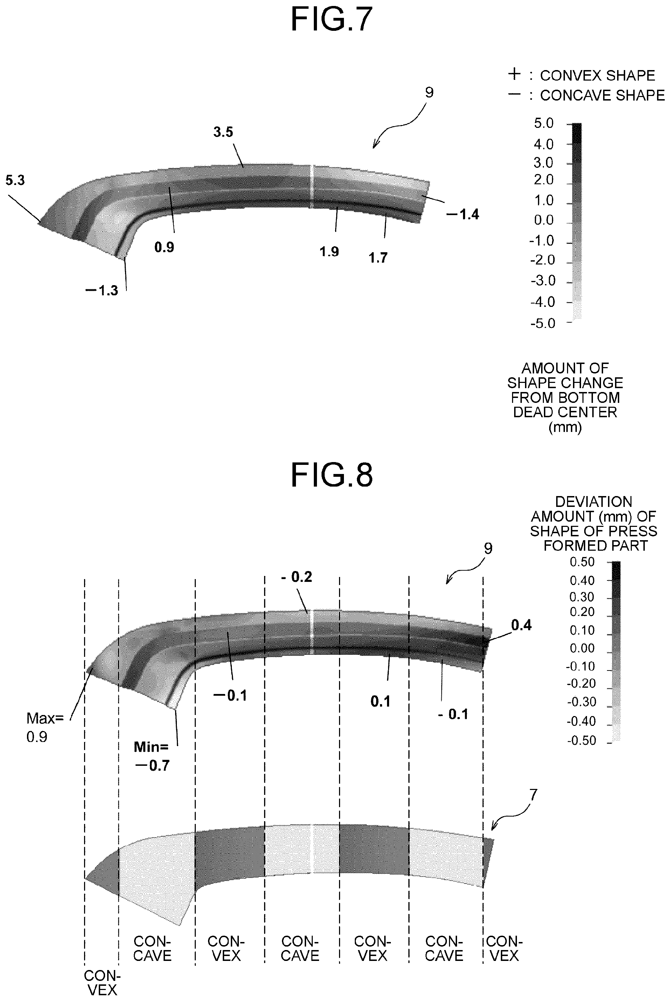

In the second shape acquisition step S5, press forming analysis in a case where press forming is performed with a predetermined tool-of-press-forming model by using the shape variation blank model 7 is performed, and a shape of a press formed part after die release is acquired as a second shape. FIG. 7 illustrates a second shape 9. Colors and numerical values in FIG. 7 are similar to those in FIG. 4.

As illustrated in FIG. 7, the second shape 9 has an amount of shape change of 5.3 mm at a left end portion, -1.3 mm at a left end of a stretch flange portion, 3.5 mm at a center portion, 1.7 to 1.9 mm at the stretch flange portion on the right side, and -1.4 mm at a right end portion. Amounts of shape change from the bottom dead center are larger than those in a case of a flat blank (FIG. 4) at right and left end portions of the press formed part and the left end of the stretch flange portion.

### <Deviation Amount Acquisition Step>

In the deviation amount acquisition step S7, the first shape 5 and the second shape 9 are compared with each other to determine a portion where both the shapes deviate from each other and a deviation amount.

In the embodiment, the shape of the press formed part at the bottom dead center is defined as a standard shape. An amount of shape change (springback amount) from the standard shape in each portion of the press formed part determined by CAE analysis is determined. The amount of shape change is compared with that in a case where a blank is replaced. A difference of an amount of shape change due to the replacement of the blank is determined as the deviation amount. That is, the deviation amount is a value obtained by subtracting the amount of shape change (FIG. 4) of the first shape 5 using a flat blank from the amount of shape change (FIG. 7) of the second shape 9 using a blank having a shape variation. Therefore, in a case of plus (+) of the difference (deviation amount) of the amount of shape change, the portion of the second shape 9 has a more convex shape than the first shape 5. In a case of minus (-) of the difference (deviation amount) of the amount of shape change, the portion of the second shape 9 has a more concave shape than the first shape 5.

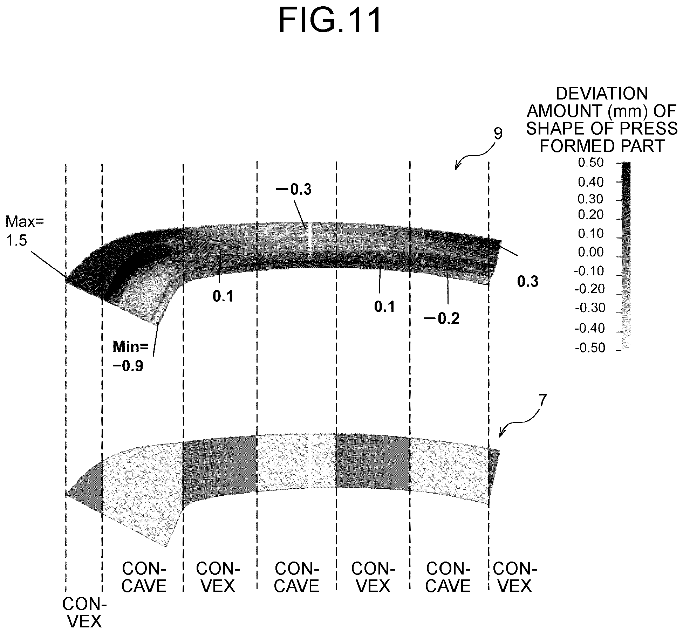

FIG. 8 illustrates a deviation amount determined in a case where deep drawing is performed and the shape variation blank model 7 having an uneven shape in association with each other. As illustrated in FIG. 8, the second shape 9 has the largest deviation amount of 0.9 mm at the left end portion. It can be seen that the convex shape at the left end portion of the shape variation blank model 7 before press forming corresponding to the portion has a great influence. Furthermore, the second shape 9 has a deviation amount of -0.7 mm at the left end of the stretch flange portion, and has a deep concave shape. It can be seen that the concave shape of the shape variation blank model 7 corresponding to the portion has a great influence. In the figure, Max represents a maximum value of the convex shape, and Min represents a maximum value (minimum in numerical value) of the concave shape. The same applies to FIG. 11.

The second shape 9 for which a deviation amount has been determined may be developed into a blank by analysis of reverse press-forming to identify a portion of the shape variation blank model 7 that influences the deviation amount.

According to the embodiment, it is possible to know an influence of the shape variation in a blank on the shape of the press formed part after springback, that is, a deviation amount caused by a greatly influenced portion and the shape variation. Furthermore, the quality of a blank can be predicted by determining the quality of a press formed part based on the deviation amount and a predetermined threshold. For example, when a plurality of press formed parts is overlapped and joined to be assembled into members of an automotive body, a large deviation amount of a flange portion particularly makes it difficult to join the press formed parts. Thus, a predetermined threshold is set for the deviation amount. A blank to be a press formed part having a deviation amount that exceeds the threshold is determined to have an influence of a shape variation and be unusable. The quality of the blank can thus be predicted. This enables grasp of a limit of the shape accuracy of the blank which falls within a shape accuracy required for the press formed part. Press forming with a stably good shape can be performed by selecting a blank having an appropriate shape. Furthermore, when a shape defect of a press formed part occurs, a portion causing the shape defect of a blank before press forming can be identified, and countermeasures therefor can be immediately taken, which leads to improvement of productivity.

Furthermore, a portion for which countermeasures through the shape of a tool of press forming and the like are taken in a case where a blank having a shape variation is used can be identified by further including a step to identify portions requiring countermeasures (identification step). In the identification step, a portion in which a maximum value of a deviation amount exceeds a preset threshold is identified as a portion requiring countermeasures. For example, in FIG. 8, when the second shape 9 has a threshold of a deviation amount of ±0.5 mm, the maximum value of the deviation amount is required to be fall within the threshold by correcting the left end portion of the second shape 9 and the left end of the stretch flange portion. Countermeasures can be taken by, for example, correcting a part of the tool of press forming of the corresponding portion.

A difference determined by subtracting the height of each portion of the shape of a press formed part after die release and springback after press forming in a case of a flat blank from the height of each portion of the shape of a press formed part after die release and springback after press forming in a case of an uneven blank in a press forming direction may be applied as a deviation amount to be determined by the difference between blank shapes. It is, however, necessary to set a fixed point common to respective press formed parts in order to compare shapes of the press formed parts caused by different blanks with each other. An approach of selecting the fixed point may cause different difference between respective portions of the press formed parts. In this regard, a deviation amount can be preferably determined accurately and easily if a bottom dead center shape and an amount of shape change are compared with each other as in the above-described embodiment.

### [Second Embodiment]

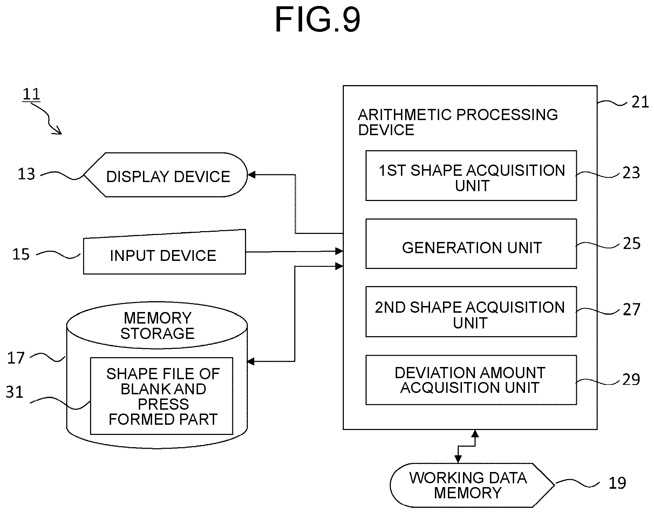

The press forming analysis method described in the first embodiment can be implemented by causing a computer such as a personal computer (PC) to execute a preset program. A press forming analysis apparatus, which is one example of such an apparatus, will be described in a present embodiment. As illustrated in FIG. 9, a press forming analysis apparatus 11 according to the embodiment includes a computer such as a personal computer (PC). The press forming analysis apparatus 11 includes a display device 13, an input device 15, a memory storage 17, a working data memory 19, and an arithmetic processing device 21. Then, the display device 13, the input device 15, the memory storage 17, and the working data memory 19 are connected to the arithmetic processing device 21. Respective functions are executed by a command from the arithmetic processing device 21. Each configuration of the press forming analysis apparatus according to the embodiment will be described below with the press formed part 1 in FIG. 2 as an analysis target.

### <<Display Device>>

The display device 13 is used for displaying an analysis result, for example. The display device 13 includes an LCD monitor.

### <<Input Device>>

The input device 15 is used for giving an instruction to display a blank, a press formed part, and the like and inputting a condition of an operator, for example. The input device 15 includes a keyboard and a mouse.

### <<Memory Storage>>

The memory storage 17 is used for storing various files such as a shape file 31 of a blank and a press formed part, for example. The memory storage 17 includes a hard disk.

### <<Working Data Memory>>

The working data memory 19 is used for temporarily storing data to be used by the arithmetic processing device 21 and performing an arithmetic operation. The working data memory 19 includes a random access memory (RAM).

### <<Arithmetic Processing Device>>

As illustrated in FIG. 9, the arithmetic processing device 21 includes a first shape acquisition unit 23, a generation unit 25, a second shape acquisition unit 27, and a deviation amount acquisition unit 29. The first shape acquisition unit 23 is a shape acquisition unit of standard press-formed part. The generation unit 25 is a generation unit of shape variation blank model. The second shape acquisition unit 27 is a shape acquisition unit of press-formed part using shape variation blank. The arithmetic processing device 21 includes a central processing unit (CPU) such as a PC. Furthermore, a unit to identify portions requiring countermeasures (identification unit) may be further included. The respective units function when the CPU executes a predetermined program. The functions of the above-described respective units in the arithmetic processing device 21 will be described below.

The first shape acquisition unit 23 executes the first shape acquisition step S1 described in the first embodiment. Similarly, the generation unit 25 executes the generation step S3. The second shape acquisition unit 27 executes the second shape acquisition step S5. The deviation amount acquisition unit 29 executes the deviation amount acquisition step S7. The identification unit executes the identification step.

According to the press forming analysis apparatus 11 of the embodiment, as in the first embodiment, it is possible to know an influence of the shape variation in a blank on the shape of the press formed part after springback, that is, a deviation amount caused by a greatly influenced portion and the shape variation. Furthermore, the quality of a blank can be predicted by determining the quality of a press formed part based on the deviation amount and a predetermined threshold. Moreover, a portion, for which countermeasures through the shape of a tool of press forming and countermeasures by a change in the shape of a press formed part are taken in a case where a blank having a shape variation is used, can be identified by including the unit to identify portions requiring countermeasures. The unit identifies, as a portion requiring countermeasures, a portion in which a deviation amount exceeds a preset threshold.

As described above, the first shape acquisition unit 23, the generation unit 25, the second shape acquisition unit 27, the deviation amount acquisition unit 29, and the identification unit in the press forming analysis apparatus 11 of the embodiment are implemented by the CPU executing a predetermined program. Therefore, a press forming analysis program according to the present invention can be identified as causing a computer to function as the first shape acquisition unit 23, the generation unit 25, the second shape acquisition unit 27, the deviation amount acquisition unit 29, and the identification unit.

### [Example]

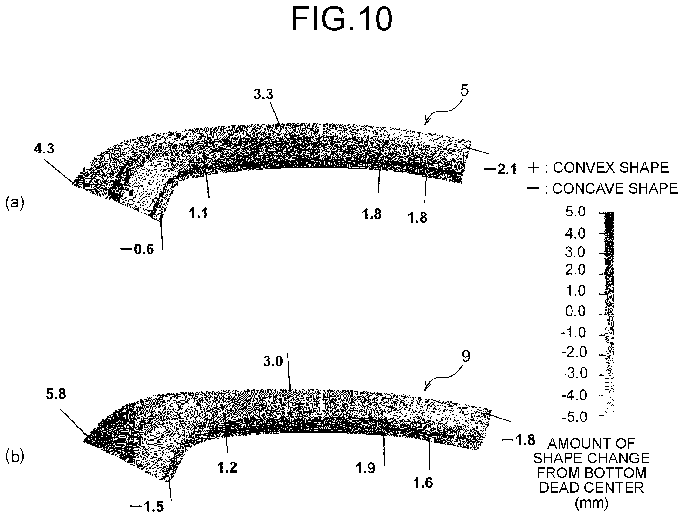

In order to confirm the effects of the present invention, a press forming analysis method was performed by using a shape variation blank model having an uneven shape and a flat blank model. Description thereof will be described below with reference to FIGS. 10 and 11. Furthermore, a blank model of a 1.5 GPa-class steel sheet having a sheet thickness of 1.2 mm was used. Numerical values, shade of color, a convex shape, and a concave shape in FIGS. 10 and 11 are the same as those in the above-described embodiment.

FIG. 10 illustrates a press formed part after die release in a case where forming by CAE analysis is used as crash forming. In FIG. 10(a), the flat blank model 3 in FIG. 3 is used. In FIG. 10(b), the shape variation blank model 7 having an uneven shape in FIGS. 5 and 6 is used.

In a case of a flat blank, as illustrated in FIG. 10(a), the first shape 5 has an amount of shape change of 4.3 mm at a left end portion, -0.6 mm at a left end of a stretch flange portion, 3.3 mm at a center portion, 1.8 mm at the stretch flange portion on the right side, and -2.1 mm at a right end portion. In contrast, as illustrated in FIG. 10(b), when the shape variation blank model 7 is used, the second shape 9 has an amount of shape change of 5.8 mm at the left end portion, -1.5 mm at the left end of the stretch flange portion, 3.0 mm at the center portion, 1.6 to 1.9 mm at the stretch flange portion on the right side, and -1.8 mm at the right end portion. It can be seen that, when the shape variation blank model 7 is used, the left end portion of the second shape 9 and the left end of the stretch flange portion have a larger amount of shape change from a bottom dead center than in a case of a flat blank.

FIG. 11 illustrates a deviation amount of the second shape 9 determined in a case where crash forming is performed and the shape variation blank model 7 having an uneven shape in association with each other. As illustrated in FIG. 11, the second shape 9 has the largest deviation amount of 1.5 mm at the left end portion. It can be seen that the convex shape at the left end portion of the shape variation blank model 7 corresponding to the portion has a great influence. Furthermore, the stretch flange portion has a large deviation amount of -0.9 mm at the left end. It can be seen that the concave shape of the blank before press forming corresponding to the portion has a great influence.

In performing joining for assembling parts constituting an automotive body, here, a threshold of ±0.5 mm was provided for a deviation amount corresponding to shape accuracy, and the quality of a press formed part using a shape variation blank having an uneven shape was predicted. As a result, it was successfully grasped, at a glance, that the left end portion of the second shape 9 and the left end of the stretch flange portion in FIG. 11 need shape correction. A press formed part having a good shape can thus be manufactured by performing press forming after correcting a tool of press forming for the portions.

### Industrial Applicability

According to the present invention, there can be provided a press forming analysis method, a press forming analysis apparatus, and a press forming analysis program for predicting an influence of a shape variation of a blank taken from a metal sheet having the shape variation in a case where press forming is performed by using the blank.

### Reference Signs List

- 1: PRESS FORMED PART (TARGET SHAPE)
- 3: FLAT BLANK MODEL
- 5: first SHAPE
- 7: SHAPE VARIATION BLANK MODEL
- 9: second SHAPE
- 11: PRESS FORMING ANALYSIS APPARATUS
- 13: DISPLAY DEVICE
- 15: INPUT DEVICE
- 17: MEMORY STORAGE
- 19: WORKING DATA MEMORY
- 21: ARITHMETIC PROCESSING DEVICE
- 23: first SHAPE ACQUISITION UNIT
- 25: GENERATION UNIT
- 27: second SHAPE ACQUISITION UNIT
- 29: DEVIATION AMOUNT ACQUISITION UNIT
- 31: SHAPE FILE OF BLANK AND PRESS FORMED PART

## Claims

1. A computer implemented press forming analysis method for predicting an influence of a shape variation of a blank taken from a metal sheet having the shape variation in a case where press forming is performed by using the blank, comprising:
a first shape acquisition step (S1) of acquiring a shape of a press formed part after die release as a first shape by performing press forming analysis in a case where press forming is performed with a predetermined tool-of-press-forming model by using a flat blank model having a flat shape;
a generation step (S3) of generating a shape variation blank model corresponding to the shape variation;
a second shape acquisition (S5) of acquiring a shape of a press formed part after die release as a second shape by performing press forming analysis in a case where press forming is performed with the predetermined tool-of-press-forming model by using the shape variation blank model; and
a deviation amount acquisition step (S7) of acquiring a portion where both of the first shape and the second shape deviate from each other and a deviation amount by comparing the first shape and the second shape.

2. The press forming analysis method according to claim 1, wherein the shape variation blank model generated in the generation step has a cyclic waveform having a predetermined pitch and a predetermined amplitude.

3. The press forming analysis method according to claim 1, wherein the shape variation blank model generated in the generation step is generated by measuring a shape of an actual blank taken from a metal sheet having a shape variation and referring to a measurement result.

4. The press forming analysis method according to any one of claims 1 to 3, wherein, in the deviation amount acquisition step, a difference between a springback amount of a predetermined portion in the first shape and a springback amount of a same portion as the predetermined portion of the first shape in the second shape is acquired as the deviation amount.

5. The press forming analysis method according to any one of claims 1 to 4, further comprising an identification step of identifying a portion where the deviation amount exceeds a preset threshold as a portion requiring a countermeasure.

6. A press forming analysis apparatus for predicting an influence of a shape variation of a blank taken from a metal sheet having the shape variation in a case where press forming is performed by using the blank, comprising:
a first shape acquisition unit (23) configured to acquire a shape of a press formed part after die release as a first shape by performing press forming analysis in a case where press forming is performed with a predetermined tool-of-press-forming model by using a flat blank model having a flat shape;
a generation (25) configured to generate a shape variation blank model corresponding to the shape variation;
a second shape acquisition unit (27) configured to acquire a shape of a press formed part after die release as a second shape by performing press forming analysis in a case where press forming is performed with the predetermined tool-of-press-forming model by using the shape variation blank model; and
a deviation amount acquisition unit (29) configured tc acquire a portion where both of the first shape and the second shape deviate from each other and a deviation amount by comparing the first shape and the second shape .

7. The press forming analysis apparatus according to claim 6, wherein the shape variation blank model generated by the generation unit has a cyclic waveform having a predetermined pitch and a predetermined amplitude.

8. The press forming analysis apparatus according to claim 6, wherein the shape variation blank model generated by the generation unit is generated based on a measured value of a shape of an actual blank taken from a metal sheet having a shape variation.

9. The press forming analysis apparatus according to any one of claims 6 to 8, wherein the deviation amount acquisition unit is configured to acquire, as the deviation amount, a difference between a springback amount of a predetermined portion in the first shape and a springback amount of a same portion as the predetermined portion of the first shape in the second shape.

10. The press forming analysis apparatus according to any one of claims 6 to 9, further comprising an identification unit configured to identify a portion where the deviation amount exceeds a preset threshold as a portion requiring a countermeasure.

11. A press forming analysis program causing a computer to function as the press forming analysis apparatus according to any one of claims 6 to 10.

## Patentansprüche

1. Computerimplementiertes Pressformungsanalyseverfahren zur Vorhersage eines Einflusses einer Formvariation einer Blechplatine, die aus einem die Formvariation aufweisenden Metallblech entnommen ist, in einem Fall, in dem eine Pressformung unter Verwendung der Blechplatine durchgeführt wird, umfassend:
einen ersten Formerfassungsschritt (S1) des Erfassens einer Form eines Pressformteils nach Entformung als eine erste Form durch Durchführen einer Pressformungsanalyse in einem Fall, in dem eine Pressformung mit einem vorbestimmten Pressformungswerkzeugmodell durch Verwenden eines Flachplatinenmodells, das eine flache Form aufweist, durchgeführt wird;
einen Erzeugungsschritt (S3) des Erzeugens eines Formvariationsplatinenmodells entsprechend der Formvariation; einen zweiten Formerfassungsschritt (S5) des Erfassens einer Form eines Pressformteils nach Entformung als
eine zweite Form durch Durchführen einer Pressformungsanalyse in einem Fall, in dem eine Pressformung mit dem vorbestimmten Pressformungswerkzeugmodell durch Verwenden des Formvariationsplatinenmodells durchgeführt wird; und
einen Abweichungsbetragserfassungsschritt (S7) des Erfassens eines Abschnitts, in dem sowohl die erste Form als auch die zweite Form voneinander abweichen, und eines Abweichungsbetrags durch Vergleichen der ersten Form und der zweiten Form.

2. Pressformungsanalyseverfahren nach Anspruch 1, wobei das im Erzeugungsschritt erzeugte Formvariationsplatinenmodell eine zyklische Wellenform aufweist, die eine vorbestimmte Teilung und eine vorbestimmte Amplitude aufweist.

3. Pressformungsanalyseverfahren nach Anspruch 1, wobei das im Erzeugungsschritt erzeugte Formvariationsplatinenmodell durch Messen einer Form einer tatsächlichen Blechplatine, die aus einem eine Formvariation aufweisenden Metallblech entnommen ist, und unter Bezugnahme auf ein Messergebnis erzeugt wird.

4. Pressformungsanalyseverfahren nach einem der Ansprüche 1 bis 3, wobei in dem Abweichungsbetragserfassungsschritt eine Differenz zwischen einem Rückfederungsbetrag eines vorbestimmten Abschnitts in der ersten Form und einem Rückfederungsbetrag eines gleichen Abschnitts wie des vorbestimmten Abschnitts der ersten Form in der zweiten Form als der Abweichungsbetrag erfasst wird.

5. Pressformungsanalyseverfahren nach einem der Ansprüche 1 bis 4, weiter umfassend einen Identifizierungsschritt des Identifizierens eines Abschnitts, in dem der Abweichungsbetrag einen voreingestellten Schwellwert überschreitet, als einen Abschnitt, der eine Gegenmaßnahme erfordert.

6. Pressformungsanalysevorrichtung zur Vorhersage eines Einflusses einer Formvariation einer Blechplatine, die aus einem die Formvariation aufweisenden Metallblech entnommen ist, in einem Fall, in dem eine Pressformung unter Verwendung der Blechplatine durchgeführt wird, umfassend:
eine erste Formerfassungseinheit (23), die ausgebildet ist, eine Form eines Pressformteils nach Entformung als eine erste Form zu erfassen, indem eine Pressformungsanalyse in einem Fall durchgeführt wird, in dem eine Pressformung mit einem vorbestimmten Pressformungswerkzeugmodell durch Verwenden eines Flachplatinenmodells, das eine flache Form aufweist, durchgeführt wird;
eine Erzeugungseinheit (25), das ausgebildet ist, ein Formvariationsplatinenmodell entsprechend der Formvariation zu erzeugen;
eine zweite Formerfassungseinheit (27), das ausgebildet ist, eine Form eines Pressformteils nach Entformung als eine zweite Form zu erfassen, indem eine Pressformungsanalyse in einem Fall durchgeführt wird, in dem eine Pressformung mit dem vorbestimmten Pressformungswerkzeugmodell durch Verwenden des Formvariationsplatinenmodells durchgeführt wird; und
eine Abweichungsbetragerfassungseinheit (29), das ausgebildet ist, einen Abschnitt, in dem sowohl die erste Form als auch die zweite Form voneinander abweichen, und einen Abweichungsbetrag durch Vergleichen der ersten Form und der zweiten Form zu erfassen.

7. Pressformungsanalyseeinrichtung nach Anspruch 6, wobei das durch die Erzeugungseinheit erzeugte Formvariationsplatinenmodell eine zyklische Wellenform aufweist, die eine vorbestimmte Teilung und eine vorbestimmte Amplitude aufweist.

8. Pressformungsanalyseeinrichtung nach Anspruch 6, wobei das durch die Erzeugungseinheit erzeugte Formvariationsplatinenmodell basierend auf einem Messwert einer Form einer tatsächlichen Blechplatine erzeugt wird, die aus einem eine Formvariation aufweisenden Metallblech entnommen ist.

9. Pressformungsanalysevorrichtung nach einem der Ansprüche 6 bis 8, wobei die Abweichungsbetragerfassungseinheit ausgebildet ist, als den Abweichungsbetrag eine Differenz zwischen einem Rückfederungsbetrag eines vorbestimmten Abschnitts in der ersten Form und einem Rückfederungsbetrag eines gleichen Abschnitts wie des vorbestimmten Abschnitts der ersten Form in der zweiten Form zu erfassen.

10. Pressformungsanalysevorrichtung nach einem der Ansprüche 6 bis 9, weiter umfassend eine Identifizierungseinheit, die ausgebildet ist, einen Abschnitt, in dem der Abweichungsbetrag einen voreingestellten Schwellwert überschreitet, als einen Abschnitt zu identifizieren, der eine Gegenmaßnahme erfordert.

11. Pressformungsanalyseprogramm, das einen Computer veranlasst, als die Pressformungsanalysevorrichtung nach einem der Ansprüche 6 bis 10 zu fungieren.

## Revendications

1. Procédé d'analyse du formage à la presse mis en œuvre par ordinateur pour prédire une influence d'une variation de forme d'un flan prélevé dans une tôle métallique présentant la variation de forme dans un cas où le formage à la presse est effectué en utilisant le flan, comprenant :
une première étape d'acquisition de forme (S1) consistant à acquérir une forme d'une pièce formée à la presse après libération d'une filière en tant que première forme en effectuant une analyse du formage à la presse dans un cas où le formage à la presse est effectué avec un modèle d'outillage de formage à la presse prédéterminé en utilisant un modèle de flan plat présentant une forme plate ;
une étape de génération (S3) consistant à générer un modèle de flan à variation de forme correspondant à la variation de forme ;
une deuxième étape d'acquisition de forme (S5) consistant à acquérir une forme d'une pièce formée à la presse après libération d'une filière en tant que deuxième forme en effectuant une analyse du formage à la presse dans un cas où le formage à la presse est effectué avec le modèle d'outillage de formage à la presse prédéterminé en utilisant le modèle de flan à variation de forme ; et
une étape d'acquisition d'une quantité d'écart (S7) consistant à acquérir une portion où à la fois la première forme et la deuxième forme s'écartent l'une de l'autre et une quantité d'écart en comparant la première forme et la deuxième forme.

2. Procédé d'analyse du formage à la presse selon la revendication 1, dans lequel le modèle de flan à variation de forme généré à l'étape de génération présente une forme d'onde cyclique présentant un pas prédéterminé et une amplitude prédéterminée.

3. Procédé d'analyse du formage à la presse selon la revendication 1, dans lequel le modèle de flan à variation de forme généré à l'étape de génération est généré en mesurant une forme d'un flan réel prélevé dans une tôle métallique présentant une variation de forme et en se référant à un résultat de mesure.

4. Procédé d'analyse du formage à la presse selon l'une quelconque des revendications 1 à 3, dans lequel, dans l'étape d'acquisition d'une quantité d'écart, une différence entre une quantité de retour élastique d'une portion prédéterminée dans la première forme et une quantité de retour élastique d'une même portion que la portion prédéterminée de la première forme dans la deuxième forme est acquise en tant que la quantité d'écart.

5. Procédé d'analyse du formage à la presse selon l'une quelconque des revendications 1 à 4, comprenant en outre une étape d'identification consistant à identifier une portion où la quantité d'écart dépasse un seuil prédéfini en tant que portion nécessitant une contre-mesure.

6. Dispositif d'analyse du formage à la presse pour prédire une influence d'une variation de forme d'un flan prélevé dans une tôle métallique présentant la variation de forme dans un cas où le formage à la presse est effectué en utilisant le flan, comprenant :
une première unité d'acquisition de forme (23) configurée pour acquérir une forme d'une pièce formée à la presse après libération d'une filière en tant que première forme en effectuant une analyse du formage à la presse dans un cas où le formage à la presse est effectué avec un modèle d'outillage de formage à la presse prédéterminé en utilisant un modèle de flan plat présentant une forme plate ;
une unité de génération (25) configurée pour générer un modèle de flan à variation de forme correspondant à la variation de forme ;
une deuxième unité d'acquisition de forme (27) configurée pour acquérir une forme d'une pièce formée à la presse après libération d'une filière en tant que deuxième forme en effectuant une analyse du formage à la presse dans un cas où le formage à la presse est effectué avec le modèle d'outillage de formage à la presse prédéterminé en utilisant le modèle de flan à variation de forme ; et
une unité d'acquisition d'une quantité d'écart (29) configurée pour acquérir une portion où à la fois la première forme et la deuxième forme s'écartent l'une de l'autre et une quantité d'écart en comparant la première forme et la deuxième forme.

7. Dispositif d'analyse du formage à la presse selon la revendication 6, dans lequel le modèle de flan à variation de forme généré par l'unité de génération présente une forme d'onde cyclique présentant un pas prédéterminé et une amplitude prédéterminée.

8. Dispositif d'analyse du formage à la presse selon la revendication 6, dans lequel le modèle de flan à variation de forme généré par l'unité de génération est généré sur la base d'une valeur mesurée d'une forme d'un flan réel prélevé dans une tôle métallique présentant une variation de forme.

9. Dispositif d'analyse du formage à la presse selon l'une quelconque des revendications 6 à 8, dans lequel l'unité d'acquisition d'une quantité d'écart est configurée pour acquérir, en tant que la quantité d'écart, une différence entre une quantité de retour élastique d'une portion prédéterminée dans la première forme et une quantité de retour élastique d'une même portion que la portion prédéterminée de la première forme dans la deuxième forme.

10. Dispositif d'analyse du formage à la presse selon l'une quelconque des revendications 6 à 9, comprenant en outre une unité d'identification configurée pour identifier une portion où la quantité d'écart dépasse un seuil prédéfini en tant que portion nécessitant une contre-mesure.

11. Programme d'analyse du formage à la presse amenant un ordinateur à fonctionner en tant que le dispositif d'analyse du formage à la presse selon l'une quelconque des revendications 6 à 10.
